# EUROPEAN PATENT SPECIFICATION

(11) **EP 2 193 961 B1**
(45) Date of publication and mention of the grant of the patent: **18.04.2012**
(21) Application number: 09168318.5
(22) Date of filing: 20.08.2009
(51) Int. Cl.: B60R 22/34

(54) **Locking mechanism with a seat belt**
Verriegelungsmechanismus für einen Sicherheitsgurt
Mécanisme de verrouillage pour ceinture de sécurité

(30) Priority: 08.12.2008 TW 97221939 U
(43) Date of publication of application: 09.06.2010
(73) Proprietor: Lee, Kuo-Hao, Taipei (TW)
(72) Inventor: Lee, Kuo-Hao, Taipei (TW)
(74) Representative: Dossmann, Gérard

(56) References cited:
- EP-A- 1 683 692
- DE-A1- 10 313 326
- DE-U1- 20 312 288
- US-B1- 6 435 442

## Description

The present invention relates to a locking mechanism for a seat belt, more particularly to a locking mechanism that tightens the belt when pulled fast. This particular invention allows muddy water, sand or dirt to fall out of or exit the mechanism and thus prevents the accumulation from sticking to the mechanism and unpredictable dangers.

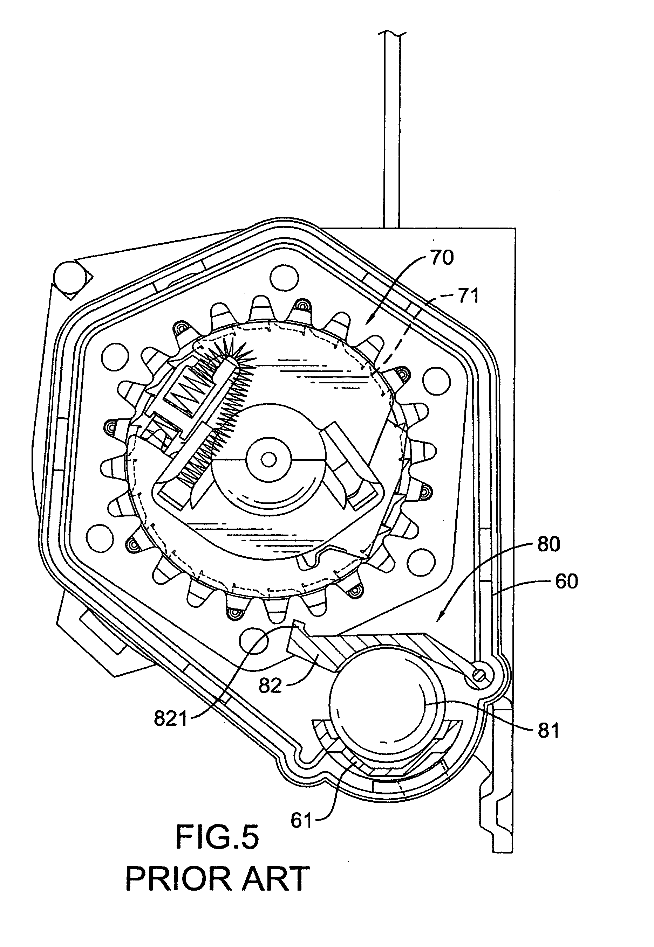

With reference to the Fig. 5, a conventional locking mechanism for a seat belt has a case, a locking set (70), a pretensioner (80) and a lid. The case is hollow and composed of a base (60) and a lid. The base (60) has a lower segment and a mount (61) mounted on the lower segment. The locking set (70) has a ratchet wheel (71) mounted on a shaft of an inertia reel and an inertia plate mounted on the ratchet wheel (71). The pretensioner (80) has a steel ball (81) disposed detachably on the mount (61) and a rod (82). The rod (82) is pivotally mounted in the case and disposed on the steel ball (81) and has an edge and a pawl (821) formed on the edge. The pawl (821) of the rod (82) can engage the ratchet wheel (71) and lock by movement of the steel ball (81) when outside conditions change, like deceleration or rollover. Therefore the seat belt shall be locked for protection.

Another example of a locking mechanism is disclosed in DE 103 13 326 A1.

The seat belt can be applied in several kinds of vehicles such as dune buggies or All Terrain Vehicles. However, if driven on sand, mud, or riverbeds, then it is possible that muddy water, sand or dirt might enter the locking mechanism. Once sand or dirt enters the locking mechanism, the sand or dirt may accumulate on the mount (61) and stick to the steel ball (81) or the rod (82) of the locking mechanism so losing the efficacy of the locking mechanism and causing an unpredictable danger. In particular, muddy water drying to a solid deposit may inhibit the locking mechanism.

To overcome the shortcomings, the present invention allows sand or dirt to fall out of the locking mechanism in order to mitigate or obviate the aforementioned problems.

The main objective of the invention is to allow muddy water, sand or dirt to fall out of the locking mechanism, and so, prevent muddy water, sand or dirt accumulation within that mechanism.

A locking mechanism for a seat belt has a case, a locking set and a pretensioner. The case is mounted adjacent to a side of a retractor having a shaft and the case is mounted around the shaft and has a mount inside the case and at least one opening being formed on the bottom. The mount has at least one hole formed therethrough. The locking set is mounted on the shaft. The pretensioner has a steel ball and a rod. The steel ball is detachably disposed on the mount and the rod is pivotally mounted in the case and is disposed on the steel ball. If muddy water, sand or dirt enters the locking mechanism, muddy water, sand or dirt can fall through the at least one hole of the mount and the at least one opening thus avoiding muddy water, sand or dirt affecting the locking mechanism.

Other objectives, advantages and novel features of the invention will become more apparent from the following detailed description when taken in conjunction with the accompanying drawings.
Fig. 1 is a partially exploded perspective view of a locking mechanism in accordance with the present invention;
Fig. 2 is front view in partial section of a third embodiment of the locking mechanism;
Fig. 3 is a partial front view of the locking mechanism in Fig. 1 shown locked;
Fig. 4 is an operational front view in partial section of the locking mechanism in Fig. 1 shown accumulation falling out; and
Fig. 5 is a front view in partial section of a conventional locking mechanism.

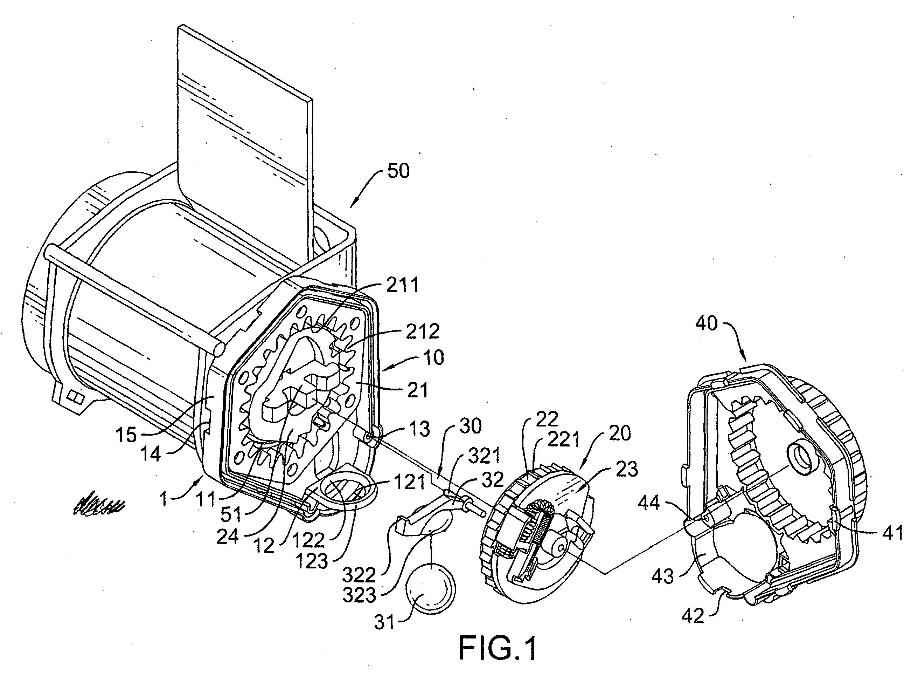

With reference to Fig. 1, a locking mechanism for a seat belt is mounted adjacent to a side of a retractor (50) having a shaft (51) protruding out of the retractor (50) and the locking mechanism is mounted around the shaft (51) and comprises a case (1), a locking set (20) and a pretensioner (30).

The case (1) is mounted adjacent to the side of the retractor (50) and has a bottom, a chamber defined inside the case (1), a side, a pivot hole (11), a mount (12) and at least one opening (42), and may be composed of a base (10) with a lower segment and a lid (40). The side of the case (1) is adjacent to the side of the retractor (50) and may further be formed on the base (10). The pivot hole (11) is formed on the side of the base (1) and around the shaft (51) of the retractor (50). The mount (12) is attached to the inside of the chamber and may be separately mounted or integrally formed on the lower segment of the base (10) and has an upper flat and at least one hole (121), and may further have a groove (122) and an annular surface (123). The groove (122) is formed on the upper flat and the at least one hole (121) is formed on the groove (122). The annular surface (123) is formed around the upper flat and is downwardly tapered.

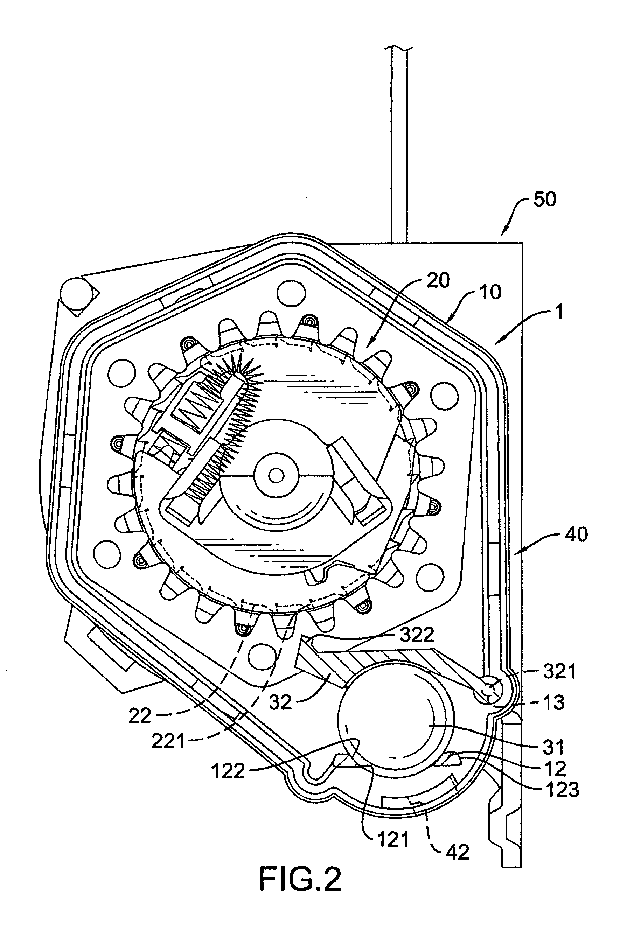

With further reference to Fig. 2, the at least one opening (42) is formed on the bottom of the case (1). The base (10) may further have an inner side, a pivot slot (13) formed on the inner side, an annular edge (15) and at least one connector (14) formed on the annular edge (15). The lid (40) is mounted on the base (10) and may have an inner side, a pivot slot (44) formed on the inner side, an annular edge (43) and at least one connector (41). The lid (40) may be mounted on the base (10) with the at least one connectors (14,41) engaging each other. The at least one opening (42) may be formed through either the annular edge (15) of the base (10) or the annular edge (43) of the lid (40) and may be better to further be formed under the mount (12).

The locking set (20) is mounted inside the chamber of the case (1) and has a ring (21), a pawl locking (24), a ratchet wheel (22), and an inertia plate (23). The ring (21) is mounted on the inner side of the base (10) to allow the shaft (51) to protrude through and has an interior surface (211) and interior teeth (212) formed on the interior surface (211). The pawl locking (24) is mounted on and connects with the shaft (51). The pawl locking (24) has an exterior surface and exterior teeth formed on the exterior surface. The exterior teeth can selectively engage the interior teeth (212). The ratchet wheel (22) is mounted on and connects with the shaft (51). The ratchet wheel (22) has an annular surface and teeth (221) formed on the annular surface. The inertia plate (23) is mounted in the ratchet wheel (22).

The pretensioner (30) has a steel ball (31) and a rod (32). The steel ball (31) is detachably disposed on the groove (122) of the mount (12). The rod (32) has two edges opposite to each other, an axle (321) formed on one edge and a pawl (322) formed on the opposite edge, and may further have a side and a hood (323) formed on the side. The rod (32) is pivotally mounted in the pivot slot (13, 44) of the base (10) and the lid (40) with the axle (321). The rod (32) is disposed on the steel ball (31) and may be disposed on the steel ball (31) by the hood (323). The pawl (322) can selectively engage the teeth (221) of the ratchet wheel (22) by the movement of steel ball (31) when outside conditions change, like deceleration or rollover.

The retractor (50) and the locking mechanism are usually mounted in vehicles. Normally, the webbing of seat belt can be pulled out slowly by the shaft (51) rotating with the pawl locking (24) and the ratchet wheel (22). If the webbing of seat belt is pulled fast, the shaft (51) is pulled to move and the exterior teeth of the pawl locking (24) move to engage the interior teeth (212) of the ring (21). The engagement of the exterior teeth and the interior teeth makes the shaft (51) stop rotating.

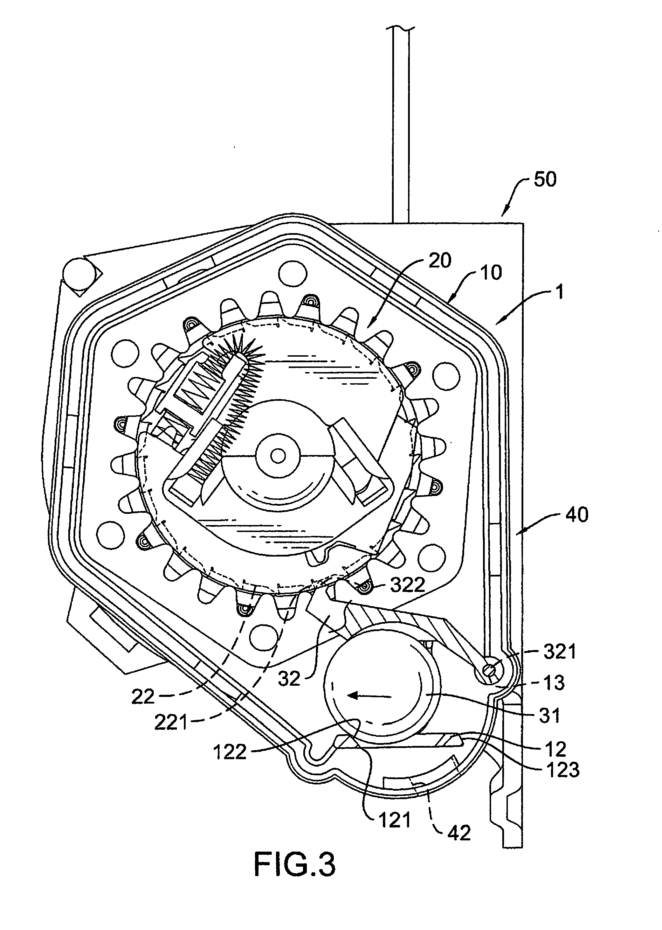

The pawl (322) of the rod (32) does not normally engage the teeth (221). With further reference to Fig. 3, if the vehicle undergoes a sudden change of acceleration, like car crash, sudden deceleration, or rollover, the steel ball (31) will move out of the groove (122) of the mount (12) and lift the rod (32) to make the pawl (322) engage the teeth (221). With the engagement of the pawl (322) and the teeth (221), the pawl (322) of the rod (32) locks the ratchet wheel (22) and makes the shaft (51) stop to prevent the webbing of seat belt from being pulled out for safety.

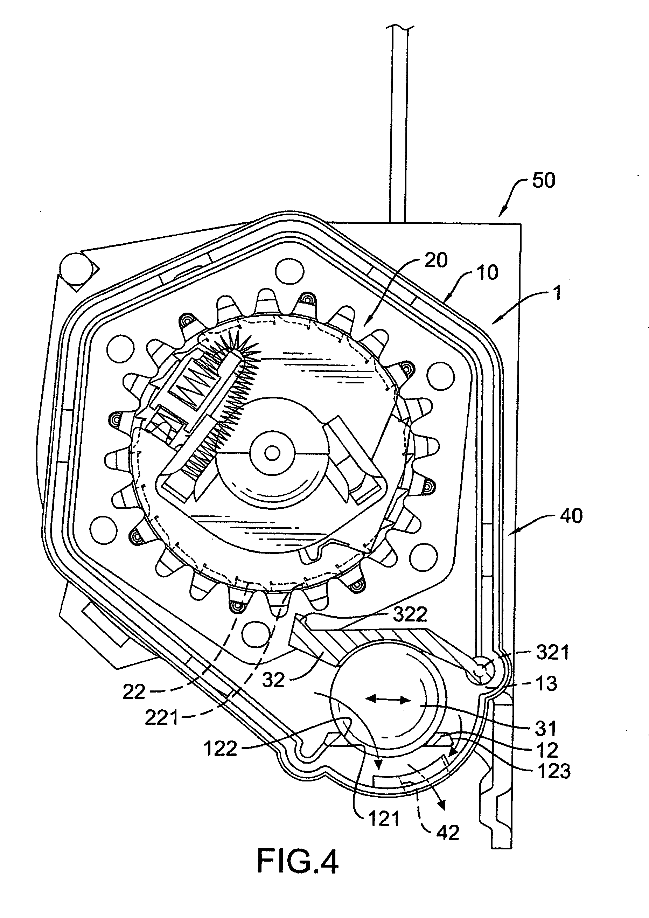

With reference to Fig. 4, when the vehicle travels on sand, mud or riverbed; then sand, dirt or muddy water might enter into the locking mechanism and form an accumulation on the bottom of the case (1) or the groove (122) of the mount (12). The accumulation on the mount (12) or the bottom of the case (1) may affect the position of the steel ball (31), the rod (32) or even the whole locking mechanism. As a result of the present invention, the movement of the vehicle, which vibrates the steel ball (31), causes the accumulation on the mount (12) to drop down through the at least one hole (121) or the annular surface (123). Therefore, the accumulation drops out of the bottom of the case (1) and falls out from the at least one opening (42). Because of such design, the accumulation would not affect the working of the locking mechanism and would not stick to members of the locking mechanism. Therefore, the present invention prevents unpredictable danger when the steel ball (31) is in an irregular position.

## Claims

1. A locking mechanism for a seat belt being mounted adjacent to a retractor (50) having a shaft (51) protruding out of the retractor (50) and the locking mechanism mounted around the shaft (51), the locking mechanism comprising:
a case (1) being mounted adjacent to the retractor (50) and having
a bottom;
a chamber defined inside the case (1);
a side being adjacent to the retractor (50);
a pivot hole (11) defined on the side and around the shaft (51) of the retractor (50);
a mount (12) attached to the inside of the chamber and having
an upper flat; and
at least one hole (121) formed on the upper flat; and
at least one opening (42) formed on the bottom of the case (1), wherein muddy water, sand or dirt can be evacuated through the at least one opening (42);
a locking set (20) mounted on the shaft (51) inside the chamber of the case (1) and having a ratchet wheel (22) with teeth (221); and
a pretensioner (30) mounted inside the chamber of the case (1) and having
a steel ball (31) detachably disposed on the mount (12); and
a rod (32) pivotally mounted inside the chamber and disposed on the steel ball (31) and having
two edges opposite te each other; and
a pawl (322) formed on one edge and selectively engaging the teeth (221) of the ratchet wheel (22).

2. The locking mechanism as claimed in claim 1, wherein the case (1) has a base (10) mounted adjacent to the retractor (50) and having a side and the pivot hole (11) formed in the side; and
a lid (40) mounted on the base (10).

3. The locking mechanism as claimed in claim 2, wherein the lid (40) has an annular edge (43) and the annular edge (43) has a bottom through which the at least one opening (42) is formed.

4. The locking mechanism as claimed in claim 2, wherein the base (10) has an annular edge (15) and the annular edge (15) has a bottom through which the at least one opening (42) is formed.

5. The locking mechanism as claimed in claim 1, 2, 3 or 4, wherein the at least one opening (42) of the case (1) is formed on the bottom of the case under the mount (12).

6. The locking mechanism as claimed in claim 5, wherein the rod (32) further has a side and a hood (323) formed on the side, and the hood (323) is disposed on the steel ball (31).

7. The locking mechanism as claimed in claim 5, wherein the mount (12) of the case (1) further has
a groove (122) formed on the upper flat and the at least one hole (121) formed on the groove (122); and
an annular surface (123) formed around the upper flat and being downwardly tapered.

## Patentansprüche

1. Verriegelungsmechanismus für einen Sicherheitsgurt, der neben einer Aufrolleinrichtung (50) angebracht ist, die eine Welle (51) aufweist, welche aus der Aufrolleinrichtung (50) vorspringt, wobei der Verriegelungsmechanismus um die Welle (51) herum angebracht ist, wobei der Verriegelungsmechanismus Folgendes umfasst:
ein Gehäuse (1), das neben der Aufrolleinrichtung (50) angebracht ist und
eine Unterseite;
eine in dem Gehäuse (1) definierte Kammer;
eine neben der Aufrolleinrichtung (50) befindliche Seite;
ein Zapfenloch (11), das an der Seite und um die Welle (51) der Aufrolleinrichtung (50) herum definiert ist;
eine Halterung (12), die an der Innenseite der Kammer angebracht ist und
eine obere Abflachung; und
zumindest eine Öffnung (121), die an der oberen Abflachung gebildet ist,
aufweist; und
zumindest eine Öffnung (42), die an der Unterseite des Gehäuses (1) gebildet ist, wobei Schlammwasser, Sand oder Schmutz durch die zumindest eine Öffnung (42) abgeführt werden können, aufweist;
einen Verriegelungssatz (20), der an der Welle (51) im Inneren der Kammer des Gehäuses (1) angebracht ist und ein Sperrrad (22) mit Zähnen (221) aufweist; und
eine Vorspanneinrichtung (30), die im Inneren der Kammer des Gehäuses (1) angebracht ist über
eine Stahlkugel (31), die abnehmbar an der Halterung (12) angeordnet ist; und
einen Stab (32), der schwenkbar im Inneren der Kammer angebracht ist und an der Stahlkugel (31) angeordnet ist und
zwei zueinander entgegengesetzte Kanten; und eine Klinke (322), die an einer Kante gebildet ist und selektiv mit den Zähnen (221) des Sperrrads (22) eingreift,
aufweist,
verfügt.

2. Verriegelungsmechanismus nach Anspruch 1, wobei das Gehäuse (1)
eine Basis (10), die neben der Aufrolleinrichtung (50) angebracht ist und eine Seite aufweist, wobei das Zapfenloch (11) in der Seite gebildet ist; und
einen Deckel (40), der an der Basis (10) angebracht ist,
aufweist.

3. Verriegelungsmechanismus nach Anspruch 2, wobei der Deckel (40) einen ringförmigen Rand (43) aufweist und der ringförmige Rand (43) eine Unterseite aufweist, durch die die zumindest eine Öffnung (42) gebildet ist.

4. Verriegelungsmechanismus nach Anspruch 2, wobei die Basis (10) einen ringförmigen Rand (15) aufweist und der ringförmige Rand (15) eine Unterseite aufweist, durch die die zumindest eine Öffnung (42) gebildet ist.

5. Verriegelungsmechanismus nach Anspruch 1, 2, 3 oder 4, wobei die zumindest eine Öffnung (42) des Gehäuses (1) an der Unterseite des Gehäuses unter der Halterung (12) gebildet ist.

6. Verriegelungsmechanismus nach Anspruch 5, wobei der Stab (32) ferner eine Seite und eine an der Seite gebildete Haube (323) aufweist, und die Haube (323) auf der Stahlkugel (31) angeordnet ist.

7. Verriegelungsmechanismus nach Anspruch 5, wobei die Halterung (12) des Gehäuses (1) ferner
eine Nut (122), die an der oberen Abflachung gebildet ist, wobei die zumindest eine Öffnung (121) an der Nut (122) gebildet ist; und
eine ringförmige Fläche (123), die um die obere Abflachung gebildet ist und abwärts gerichtet angeschrägt ist,
aufweist.

## Revendications

1. Mécanisme de blocage pour ceinture de sécurité monté en position adjacente à un rétracteur (50) comportant un axe (51) faisant saillie hors du rétracteur (50) et le mécanisme de blocage étant monté autour de l'axe (51), le mécanisme de blocage comprenant :
un boîtier (1) monté en position adjacente au rétracteur (50) et ayant :
un fond ;
une chambre définie à l'intérieur du boîtier (1) ;
un côté étant adjacent au rétracteur (50) ;
un trou de pivotement (11) défini sur le côté et autour de l'axe (51) du rétracteur (50) ;
un support (12) fixé à l'intérieur de la chambre et comportant :
un méplat supérieur ; et
au moins un trou (121) formé sur le méplat supérieur ; et
au moins une ouverture (42) formée sur le fond du boîtier (1), dans lequel l'eau boueuse, le sable ou la poussière peuvent être évacués à travers ladite au moins une ouverture (42) ;
un ensemble de blocage (20) monté sur l'axe (51) à l'intérieur de la chambre du boîtier (1) et comportant une roue à rochet (22) munie de dents (221) ; et
un prétendeur (30) monté à l'intérieur de la chambre du boîtier (1) et comportant :
une bille en acier (31) placée de manière détachable sur le support (12) ; et
une tige (32) montée à pivotement à l'intérieur de la chambre et placée sur la bille en acier (31) et comportant :
deux bords opposés l'un à l'autre ; et
un cliquet (322) formé sur un bord et se mettant en prise sélectivement avec les dents (221) de la roue à rochet (22).

2. Mécanisme de blocage selon la revendication 1, dans lequel le boîtier (1) comporte :
une base (10) montée en position adjacente au rétracteur (50) et ayant un côté et le trou de pivotement (11) formé dans le côté ; et
un couvercle (40) monté sur la base (10).

3. Mécanisme de blocage selon la revendication 2, dans lequel le couvercle (40) a un bord annulaire (43) et le bord annulaire (43) a un fond dans lequel ladite au moins une ouverture (42) est formée.

4. Mécanisme de blocage selon la revendication 2, dans lequel la base (10) a un bord annulaire (15) et le bord annulaire (15) a un fond dans lequel ladite au moins une ouverture (42) est formée.

5. Mécanisme de blocage selon la revendication 1, 2, 3 ou 4, dans lequel ladite au moins une ouverture (42) du boîtier (1) est formée dans le fond du boîtier, sous le support (12).

6. Mécanisme de blocage selon la revendication 5, dans lequel la tige (32) a en outre un côté et un chapeau (323) formé sur le côté, et le chapeau (323) est placé sur la bille en acier (31).

7. Mécanisme de blocage selon la revendication 5, dans lequel le support (12) du boîtier (1) comporte en outre :
une rainure (122) formée sur le méplat supérieur et ledit au moins un trou (121) formé sur la rainure (122) ; et
une surface annulaire (123) formée autour du méplat supérieur et se rétrécissant vers le bas.
